(19) Europäisches Patentamt
European Patent Office
Office européen des brevets

(11) **EP 4 166 026 B1**

(12) **EUROPEAN PATENT SPECIFICATION**

(45) Date of publication and mention
of the grant of the patent:
**29.05.2024 Bulletin 2024/22**

(21) Application number: **22196647.6**

(22) Date of filing: **20.09.2022**

(51) International Patent Classification (IPC):
*A43B 5/06* $^{(2022.01)}$     *A43B 7/32* $^{(2006.01)}$
*A43B 13/02* $^{(2022.01)}$     *A43B 13/18* $^{(2006.01)}$

(52) Cooperative Patent Classification (CPC):
**A43B 13/026**

(54) **PLATE, SOLE, SHOE, AND METHOD OF MANUFACTURING PLATE**

PLATTE, SOHLE, SCHUH UND VERFAHREN ZUR HERSTELLUNG EINER PLATTE

PLAQUE, SEMELLE, CHAUSSURE ET PROCÉDÉ DE FABRICATION DE PLAQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2021 JP 2021169235**

(43) Date of publication of application:
**19.04.2023 Bulletin 2023/16**

(73) Proprietors:
• **ASICS Corporation**
  **Kobe-shi Hyogo 650-8555 (JP)**
• **Toray Industries, Inc.**
  **Tokyo 103-8666 (JP)**

(72) Inventors:
• **Tateno, Kenta**
  **Hyogo, 650-8555 (JP)**
• **Mitsuhata, Yoshikazu**
  **Hyogo, 650-8555 (JP)**
• **Hirata, Shin**
  **Aichi, 455-8502 (JP)**
• **Suzuki, Ryo**
  **Tokyo, 103-8666 (JP)**

(74) Representative: **Marks & Clerk LLP**
**15 Fetter Lane**
**London EC4A 1BW (GB)**

(56) References cited:
**EP-A2- 1 025 770     WO-A1-91/09547**

**Description**

BACKGROUND OF THE INVENTION

Field of the Invention

This disclosure relates to a plate, a sole, a shoe, and a method of manufacturing a plate.

Description of the Background Art

With reduction in weight of a material for forming a midsole in a sole in recent years, a sole with a midsole having a larger thickness for enhancing shock-absorbing performance has increased. With a larger thickness of the sole, on the other hand, a distance from the ground to the center of gravity of a body increases, and a plate may be provided in the midsole for enhancing stability.

For example, Japanese National Patent Publication No. 2018-534028 discloses a sole structure including an outsole, a cushioning member provided on the outsole, a midsole provided on the cushioning member, and a plate arranged between the cushioning member and the midsole. The plate is uniform in flexural rigidity in its entirety.

WO 91/09547 A1 discloses a sole for an article of footwear, such as a soccer boot or a training shoe, the sole incorporating a component comprising glass fibres in a polyurethane or similar matrix. The fibres in the fore-part extend transversely and permit transverse flexure at the ball of the wearer's foot while resisting flexure about a longitudinal axis, and while the fibres in the waist or shank extend lengthwise to resist transverse flexure.

SUMMARY OF THE INVENTION

The plate described in Japanese National Patent Publication No. 2018-534028 is very high in flexural rigidity because it is formed of a plurality of fiber layers. Therefore, in natural running motions in which a foot contacts the ground from an outer side in a foot width direction, loads imposed on a foot portion may be high depending on a way of contact with the ground. This is more noticeable as the plate is arranged lower in the sole.

An object of the present disclosure is to provide a plate, a sole, a shoe, and a method of manufacturing a plate that can achieve both of mitigation of shock at the time of contact with the ground and improvement in stability in a foot length direction.

A plate according to the present invention is defined in claim 1. Advantageous embodiments of the plate according to the invention are defined in dependent claims 2 to 8.

A plate according to the claimed invention is a plate used for a sole that forms a part of a shoe. The plate includes a reinforcement portion composed of a composite material containing a synthetic resin and a plurality of fibers. The plurality of fibers in the reinforcement portion each have a weight average fiber length not shorter than 0.4 mm and not longer than 7.0 mm and have such an orientation property that orientations are aligned in a foot length direction. The weight average fiber length is calculated in accordance with:

$$\text{average fiber length} = \Sigma(\text{Mi}^2 \times \text{Ni})/\Sigma(\text{Mi} \times \text{Ni})$$

Mi: fiber length (mm)
Ni: the number of fibers having the fiber length Mi; and

The plate includes a front reinforcement region extending from a front end portion located at a front end in the foot length direction of the shoe to a part superimposed in a direction of thickness of the sole, on a line that connects central portions of metatarsal bones of a wearer of the shoe to each other. The reinforcement portion is provided over an entirety of the front reinforcement region.

Flexural rigidity of the reinforcement portion in a foot length direction of the shoe may be at least two times as high as flexural rigidity of the reinforcement portion in a foot width direction of the shoe.

A sole according to one aspect of this disclosure includes the plate according to any one of claims 1 to 8 and a midsole that holds the plate.

A shoe according to one aspect of this disclosure includes the sole according to claim 9 and an upper connected to the sole and located above the sole.

A method of manufacturing a plate according to the claimed invention is defined in claim 11.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a cross-sectional view schematically showing a shoe in one embodiment of the present disclosure.
Fig. 2 is a plan view showing relation between the sole and a bone of a foot of a wearer of the shoe.
Fig. 3 is a perspective view of a plate.
Fig. 4 is a cross-sectional view schematically showing a mold used for manufacturing the plate.
Figs. 5 to 10 are each a plan view showing a modification of the plate.
Fig. 11 shows a table showing results in Example and Comparative Example.

DESCRIPTION OF THE PREFERRED EMBODIMENTS

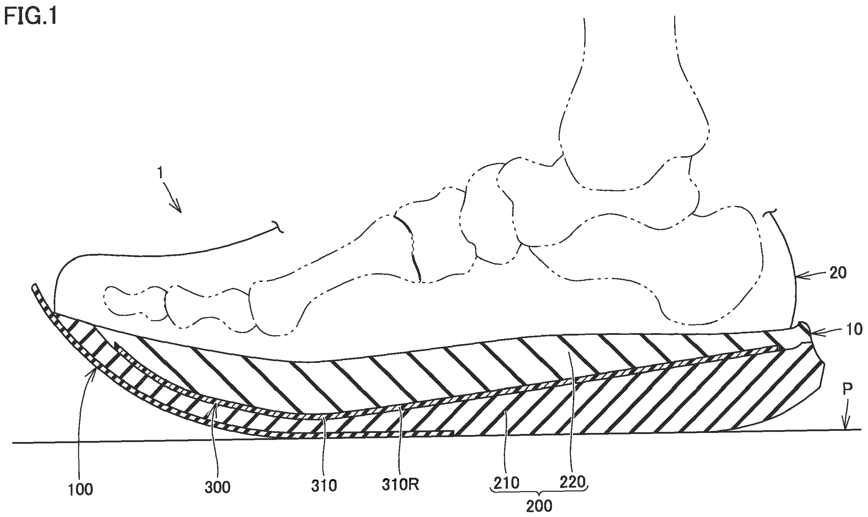

An embodiment of this disclosure will be described with reference to the drawings. The same or corresponding members in the drawings referred to below have the same reference characters allotted. In the description below, such terms as a foot length direction, a foot width direction, front, and rear are used. The terms indicating directions refer to directions viewed from a point of view of a wearer who wears a shoe 1 placed on a flat plane P (see Fig. 1) such as the ground. For example, the front refers to a toe side and the rear refers to a heel side. In addition, an inner side refers to an inner side of a foot (a first toe side of a foot) in the foot width direction and an outer side refers to an outer side of the foot in the foot width direction. The foot width direction means a direction orthogonal to the foot length direction.

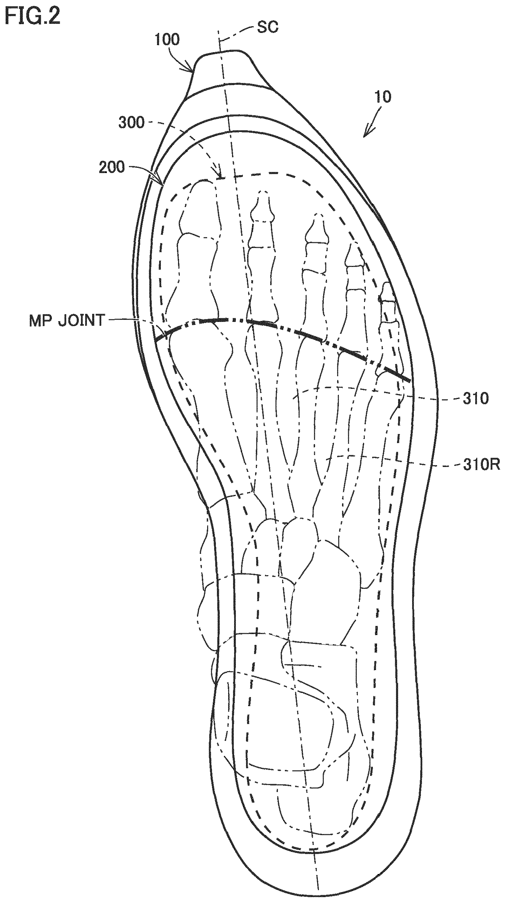

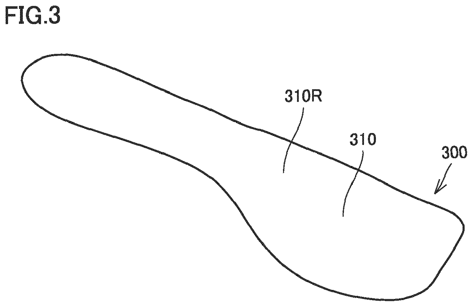

Fig. 1 is a cross-sectional view schematically showing a shoe in one embodiment of the present disclosure. Fig. 2 is a plan view showing relation between the sole and a bone of a foot of a wearer of the shoe. Fig. 3 is a perspective view of a plate.

Fig. 2 shows a sole 10 including a plate 300 for a right foot and Fig. 3 shows the plate 300 for a left foot. The plates 300 are in a shape symmetrical to each other. This is also applicable to a sole 10 and the shoe 1 including the plate 300. The shoe 1 in the present embodiment is applicable, for example, as a sports shoe for such sports as running and a walking shoe, and the shoe 1 may be used in any application.

As shown in Fig. 1, the shoe 1 includes the sole 10 and an upper 20.

The upper 20 is connected to the sole 10, and defines, together with the sole 10, a space where a foot of a wearer is accommodated.

As shown in Fig. 1, the sole 10 includes an outer sole 100, a midsole 200, and the plate 300.

The outer sole 100 forms a grounding portion. The outer sole 100 is composed of a resin, rubber, or the like.

The midsole 200 is provided on the outer sole 100. The midsole 200 is formed of a foamed material or the like made of a resin. The upper 20 is arranged on the midsole 200. In other words, the midsole 200 is provided between the upper 20 and the outer sole 100.

As shown in Fig. 1, the midsole 200 includes a lower midsole 210 and an upper midsole 220.

The lower midsole 210 is provided on the outer sole 100. At least a part of a lower surface of the lower midsole 210 is covered with the outer sole 100. The lower surface of the lower midsole 210 may be covered with the outer sole 100 only partially or entirely.

The upper midsole 220 is connected on the lower midsole 210. The upper midsole 220 may be higher in rigidity than the lower midsole 210 or may be equal in rigidity to the lower midsole 210.

The plate 300 forms a part of the sole 10. The plate 300 is provided in the midsole 200. As shown in Fig. 1, in the present embodiment, the plate 300 is arranged within the midsole 200. Specifically, the plate 300 is arranged between the lower midsole 210 and the upper midsole 220. The plate 300 is bonded to at least one of the lower midsole 210 and the upper midsole 220. The midsole 200 includes an accommodation portion that defines a space where the plate 300 is accommodated. The accommodation portion is in a shape conforming to the shape of the plate 300.

As shown in Figs. 1 and 2, the plate 300 is in a shape extending from a position superimposed in a direction of thickness of the sole 10, on a front end of a foot of a wearer of the shoe 1 to a position superimposed in the direction of thickness, on a rear end of the foot of the wearer.

As shown in Figs. 1 to 3, the plate 300 includes a reinforcement portion 310. In the present embodiment, the entire plate 300 is formed from the reinforcement portion 310. The reinforcement portion 310, however, may be formed only in a part of the plate 300. The reinforcement portion 310 is composed of a composite material containing a synthetic resin and a plurality of fibers. Examples of fibers contained in the composite material include carbon fibers, glass fibers, aramid fibers, dyneema® fibers, ZYLON® fibers, and boron fibers. In the present embodiment, carbon fibers are employed as the fibers. The reinforcement portion 310 is preferably formed by injection molding. The reinforcement portion 310 has a specific gravity preferably not larger than 1.15 and more preferably not larger than 1.13. The specific gravity is preferably not smaller than 1.05.

The plurality of fibers in the reinforcement portion 310 each have a weight average fiber length not shorter than 0.4 mm and have such an orientation property that orientations thereof are aligned in the foot length direction. These fibers have a weight average fiber length not shorter than 0.4 mm and not longer than 7.0 mm. When fibers in which an angle formed between a longitudinal direction thereof and the foot length direction is not larger than forty-five degrees occupy at least 50% of the total number of fibers per unit volume, such fibers are defined herein as "having the orientation property."

The foot length direction is a direction in parallel to a shoe center SC (see Fig. 2). The shoe center SC is not limited to a centerline of the shoe 1 but may be a line corresponding to a straight line that connects the center of a heel bone of a standard wearer of the shoe 1 to a position between the first toe and the second toe.

The length of each fiber included in the reinforcement portion 310 can be measured as below. Specifically, for example, a sample piece having a 2cm-square size is taken from the reinforcement portion 310. Then, only a plurality of fibers are extracted by burning or dissolving only a synthetic resin component contained in the sample piece. Those fibers are measured with an optical microscope or the like. This measurement is preferably conducted, for example, for approximately 400 to 1000 fibers.

The reinforcement portion 310 is higher in orientation property in a middle portion (a region where a dimension in the foot width direction decreases toward the rear in the foot length direction) than in a front end portion and a rear end portion in the foot length direction. The reinforcement portion 310 includes an orientation region 310R (see Figs. 1 to 3) that gradually becomes higher in orientation property from a part located closest to the plane P when the shoe 1 is placed on the plane P toward the rear in the foot length direction.

The reinforcement portion 310 is higher in flexural rigidity than the midsole 200. Flexural rigidity of the reinforcement portion 310 in the foot length direction is at least two times as high as flexural rigidity of the reinforcement portion 310 in the foot width direction. Flexural rigidity of the reinforcement portion 310 in the foot length direction is more preferably at least 2.5 times as high as flexural rigidity of the reinforcement portion 310 in the foot width direction. For example, flexural rigidity of the reinforcement portion 310 in the foot length direction is set to be not lower than 10 GPa and not higher than 17 GPa. Flexural rigidity of the reinforcement portion 310 in the foot width direction is set to be not lower than 5 GPa and not higher than 10 GPa.

Flexural rigidity of the reinforcement portion 310 in the foot length direction means rigidity at the time when the reinforcement portion 310 is bent with respect to a straight line in parallel to the foot width direction. Flexural rigidity of the reinforcement portion 310 in this foot length direction is measured in a three-point bending test. Specifically, a sample piece is cut from the reinforcement portion 310, and while two points in the sample piece distant from each other in the foot length direction are supported, a point intermediate between the two points is pressed by an indenter in the direction of thickness of the sample piece to measure flexural rigidity. A sample piece is cut, for example, into such a size that a support span is set to 24 mm and a dimension in a direction orthogonal to a direction of connection of supported points is set to 10 mm. A rate of pressing by the indenter is set to 2 mm/min.

Flexural rigidity of the reinforcement portion 310 in the foot width direction means rigidity at the time when the reinforcement portion 310 is bent with respect to a straight line in parallel to the foot length direction. A method of measuring this flexural rigidity is similar to the method of measuring flexural rigidity of the reinforcement portion 310 in the foot length direction.

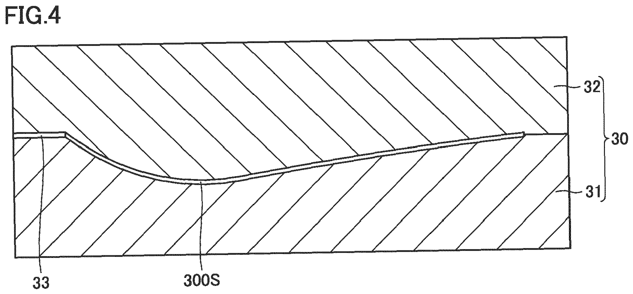

A method of manufacturing a plate 300 will now be described with reference to Fig. 4. This manufacturing method includes a preparation step and an injection step.

The preparation step is a step of preparing a mold 30 provided with a space 300S in a shape conforming to the plate 300. The mold 30 includes a lower mold 31 and an upper mold 32 connectable to and separable from the lower mold 31. The space 300S is provided at a boundary between the lower mold 31 and the upper mold 32. The mold 30 includes a gate 33 that communicates with the space 300S. The gate 33 communicates with an end portion on the toe side of the space 300S. The gate 33 may communicate with an end portion on the heel side of the space 300S.

The injection step is a step of forming, by injecting a composite material containing a synthetic resin and a plurality of fibers through the gate 33 from the toe side toward the heel side in the mold 30, the reinforcement portion 310 having such an orientation property that orientations of the plurality of fibers are aligned in the foot length direction. When the gate 33 communicates with the end portion on the heel side of the space 300S, in the injection step, the composite material is injected from the heel side toward the toe side in the mold 30.

As described above, in the plate 300 in the present invention, each fiber in the reinforcement portion 310 has the weight average fiber length not shorter than 0.4 mm and not longer than 7.0 mm and has such an orientation property that the orientation thereof is aligned in the foot length direction. Therefore, flexural rigidity of the reinforcement portion 310 in the foot length direction is higher than flexural rigidity of the reinforcement portion 310 in the foot width direction. Specifically, flexural rigidity of the reinforcement portion 310 in the foot length direction is at least two times as high as flexural rigidity of the reinforcement portion 310 in the foot width direction. In other words, flexural rigidity of the reinforcement portion 310 in the foot width direction is lower than flexural rigidity of the reinforcement portion 310 in the foot length direction. Therefore, in natural running motions in which the foot contacts the ground from the outer side in the foot width direction, loads imposed on the foot portion at the time of contact with the ground are mitigated. Since flexural rigidity of the reinforcement portion 310 in the foot length direction is high, excessive deformation of the sole 10 in particular at the time of take-off is suppressed and hence stability in the foot length direction is improved.

Since the plate 300 including the reinforcement portion 310 in the present embodiment is formed by injection molding, excessive flexural rigidity can be avoided as in the plate described in Patent Literature 1 (Japanese National Patent Publication No. 2018-534028), that is, the structure in which a plurality of prepreg fiber sheets are layered. In addition, since the fibers in the reinforcement portion 310 have such an orientation property that orientations thereof are aligned in the foot length direction, flexural rigidity in the foot length direction necessary for providing efficiency in running or stability is secured.

A modification of the embodiment will be described below.

(First Modification)

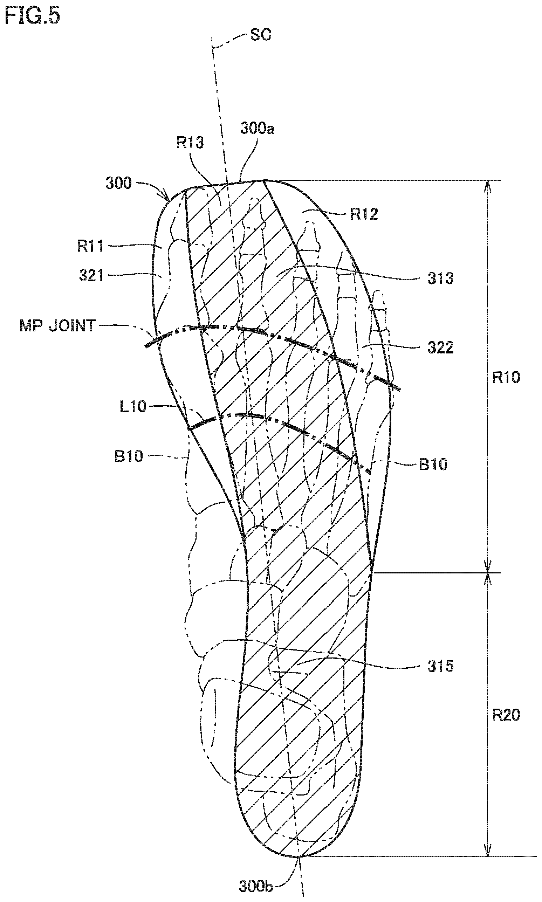

As shown in Fig. 5, the plate 300 may include a front reinforcement region R10 and a rear reinforcement region R20.

The front reinforcement region R10 extends from a front end portion 300a located at a front end of the plate 300 in the foot length direction toward a rear end portion 300b located at a rear end of the plate 300 in the foot length direction. More specifically, the front reinforcement region R10 extends from the front end portion 300a to a part superimposed in the direction of thickness of the sole 10, on a line L10 that connects central portions of metatarsal bones B10 of the wearer of the shoe 1 to each other. In an example shown in Fig. 5, the front reinforcement region R10 is formed in a range from the front end portion 300a of the plate 300 to a part closer to the rear end portion 300b than the line L10. In the example shown in Fig. 5, the front reinforcement region R10 is a region located in a range approximately from 0% to 60% of the entire length of the plate 300 from the front end portion 300a toward the rear end portion 300b.

The front reinforcement region R10 includes an inner foot region R11, an outer foot region R12, and a middle region R13.

The inner foot region R11 is formed on an inner side in the foot width direction. The inner foot region R11 is formed in a range superimposed on the metatarsal bone B10 of the first toe in the direction of thickness.

The outer foot region R12 is formed on an outer side in the foot width direction. The outer foot region R12 is formed in a range superimposed on the metatarsal bone B10 of a fifth toe in the direction of thickness.

The middle region R13 is formed between the inner foot region R11 and the outer foot region R12. The middle region R13 is formed in a range superimposed on the metatarsal bone B10 of the second toe and the metatarsal bone B10 of the third toe in the direction of thickness.

The rear reinforcement region R20 extends from a rear end portion of the front reinforcement region R10 to the rear end portion 300b of the plate 300.

The reinforcement portion 310 includes a middle reinforcement portion 313 provided in the middle region R13 and a rear reinforcement portion 315 provided in the rear reinforcement region R20. The middle reinforcement portion 313 and the rear reinforcement portion 315 are contiguous in the foot length direction. The rear reinforcement portion 315 is provided in the entire region in the foot width direction. Fig. 5 shows the middle reinforcement portion 313 and the rear reinforcement portion 315 with hatching.

The plate 300 may further include an inner foot support portion 321 and an outer foot support portion 322.

The inner foot support portion 321 is provided in the inner foot region R11. Flexural rigidity of the inner foot support portion 321 in the foot width direction is lower than flexural rigidity of the middle reinforcement portion 313 in the foot width direction.

The outer foot support portion 322 is provided in the outer foot region R12. Flexural rigidity of the outer foot support portion 322 in the foot width direction is lower than flexural rigidity of the middle reinforcement portion 313 in the foot width direction.

In this aspect, a degree of freedom in selection of a material for the inner foot support portion 321 and the outer foot support portion 322 is enhanced, for example, in such a manner as forming the inner foot support portion 321 and the outer foot support portion 322 of a material different from a material for the reinforcement portion 310.

In a first modification, the inner foot region R11 where the inner foot support portion 321 is provided may be formed from the reinforcement portion 310.

(Second Modification)

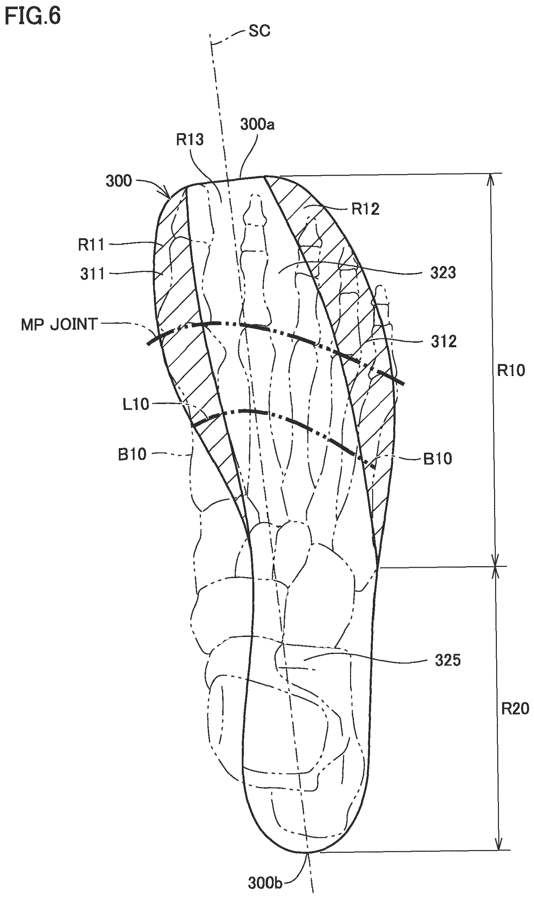

As shown in Fig. 6, the reinforcement portion 310 may include an inner foot reinforcement portion 311 provided in the inner foot region R11 and an outer foot reinforcement portion 312 provided in the outer foot region R12. The inner foot region R11 and the outer foot region R12 are the same in shape as in the first modification. Fig. 6 shows the inner foot reinforcement portion 311 and the outer foot reinforcement portion 312 with hatching.

The plate 300 may further include a middle support portion 323 provided in the middle region R13 and a rear support portion 325 provided in the rear reinforcement region R20. The middle support portion 323 and the rear support portion 325 are contiguous in the foot length direction. The rear support portion 325 is provided in the entire region in the foot width direction.

Flexural rigidity of the inner foot reinforcement portion 311 in the foot width direction is lower than flexural rigidity of the middle support portion 323 in the foot width direction. Flexural rigidity of the outer foot reinforcement portion 312 in the foot width direction is lower than flexural rigidity of the middle support portion 323 in the foot width direction.

In a second modification, the inner foot region R11 where the inner foot reinforcement portion 311 is provided may be composed of a material the same as a material for the middle support portion 323.

(Third Modification)

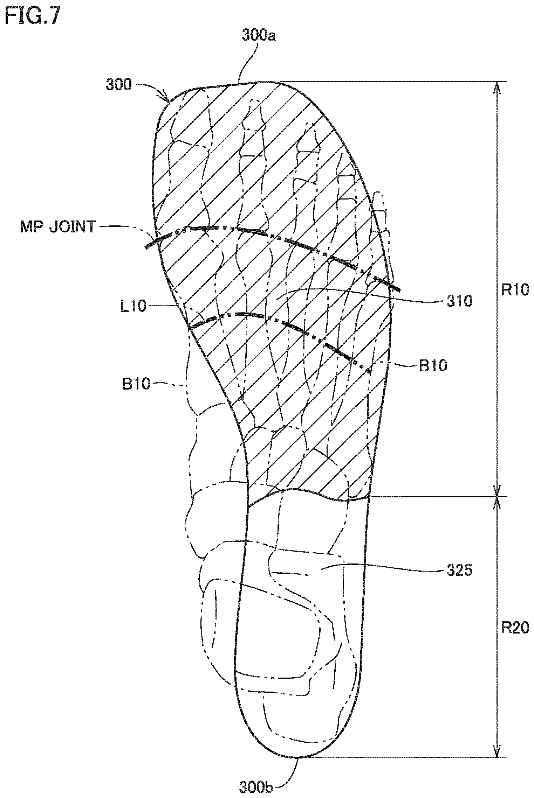

As shown in Fig. 7, the plate 300 may include the front reinforcement region R10 and the rear reinforcement region R20. In this example, the front reinforcement region R10 is a region located in a range approximately from 0% to 65% of the entire length of the plate 300 from the front end portion 300a toward the rear end portion 300b. In an example shown in Fig. 7, the reinforcement portion 310 is provided in the entire front reinforcement region R10. Fig. 7 shows the reinforcement portion 310 with hatching.

The plate 300 may further include the rear support portion 325 provided in the rear reinforcement region R20. The rear support portion 325 may be lower or higher in flexural rigidity than the reinforcement portion 310.

This plate 300 is formed by injecting the composite material containing the synthetic resin and the plurality of fibers from the end portion on the toe side into the space 300S in the mold 30 and injecting a material different from the composite material (a material composed only of the synthetic resin or the like) from the end portion on the heel side into the space 300S.

In this aspect, since the reinforcement portion 310 is arranged in a range that extends across an MP joint of the foot of the wearer in the foot length direction, excessive deformation of the sole 10 in particular at the time of take-off is suppressed.

(Fourth Modification)

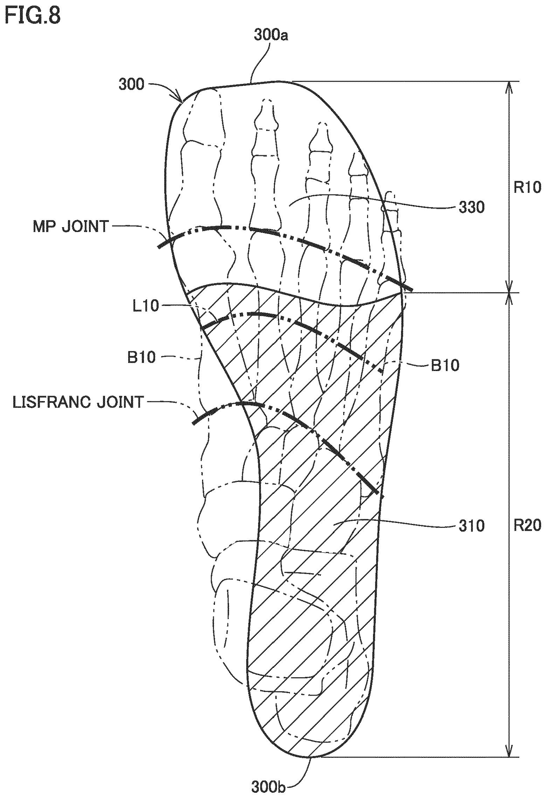

As shown in Fig. 8, the plate 300 may include the front reinforcement region R10 and the rear reinforcement region R20. The rear reinforcement region R20 extends from the rear end portion 300b of the plate 300 to a part superimposed in the direction of thickness of the sole 10, on the line L10 that connects the central portions of the metatarsal bones B 10 of the wearer of the shoe 1 to each other. In an example shown in Fig. 8, the rear reinforcement region R20 is formed in a range from the rear end portion 300b of the plate 300 to a part closer to the front end portion 300a of the plate 300 than the line L10. In this example, the rear reinforcement region R20 is a region located in a range approximately from 0% to 70% of the entire length of the plate 300 from the rear end portion 300b toward the front end portion 300a. The reinforcement portion 310 is provided in the entire rear reinforcement region R20. Fig. 8 shows the reinforcement portion 310 with hatching.

The plate 300 may further include a front support portion 330 provided in the front reinforcement region R10. The front support portion 330 may be lower or higher in flexural rigidity than the reinforcement portion 310.

This plate 300 is formed by injecting the composite material containing the synthetic resin and the plurality of fibers from the end portion on the heel side into the space 300S in the mold 30 and injecting a material different from the composite material (a material composed only of the synthetic resin or the like) from the end portion on the toe side into the space 300S.

In this aspect, since the reinforcement portion 310 is arranged in a range that extends across a Lisfranc joint of the foot of the wearer in the foot length direction, excessive deformation of the sole 10 in particular at the time of take-off is suppressed.

(Fifth Modification)

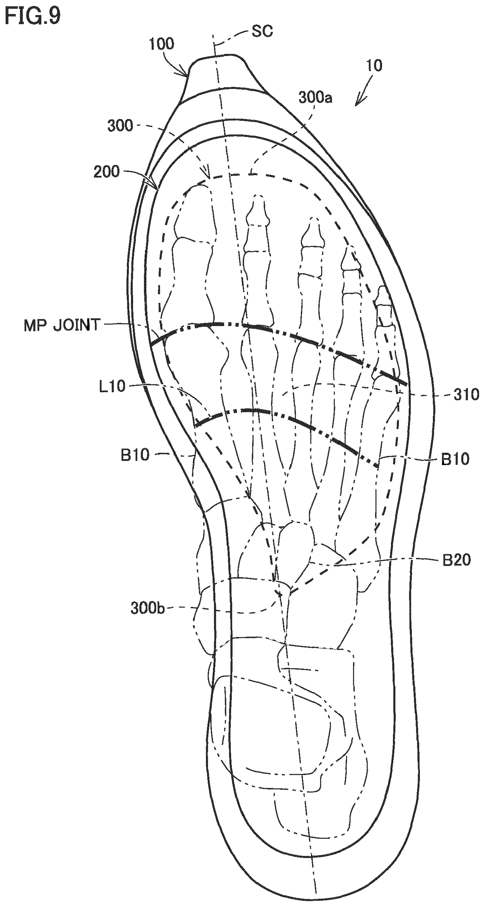

As shown in Fig. 9, the rear end portion 300b of the plate 300 may be formed at a position superimposed in the direction of thickness, on a third cuneiform bone (a lateral cuneiform bone) of the foot of the wearer of the shoe 1 or at a position slightly in the rear of that position in the foot length direction. In this example as well, the entire plate 300 may be formed from the reinforcement portion 310.

(Sixth Embodiment)

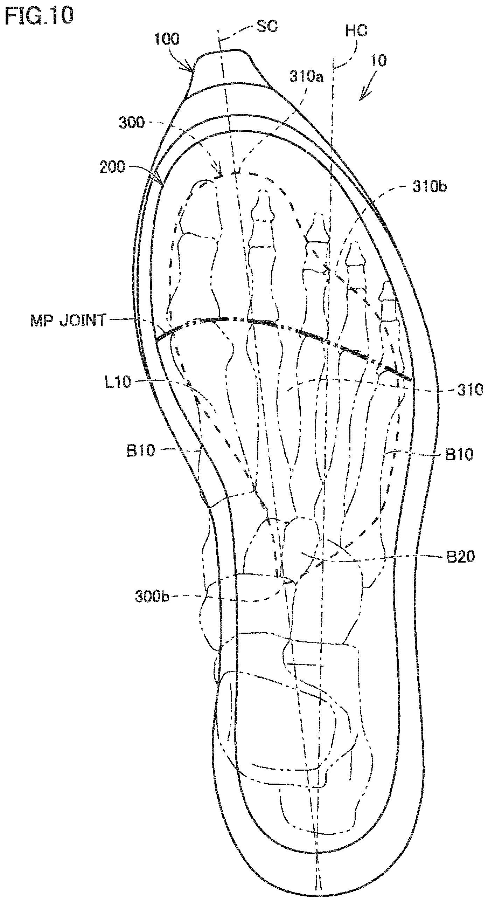

As shown in Fig. 10, the rear end portion 300b of the plate 300 may be similar to that in the fifth modification and the plate 300 may have an edge on the front end side formed from a front edge portion 310a and a recessed edge portion 310b.

The front edge portion 310a is formed at a position superimposed on a first distal phalanx and a second distal phalanx of the wearer in the direction of thickness or at a position in front of those positions in the foot length direction. The front edge portion 310a is in a shape convexly curved toward the front in the foot length direction. More specifically, the front edge portion 310a is in a shape convexly curved toward the front along the shoe center SC.

The recessed edge portion 310b is in a shape that extends from an outer end of the front edge portion 310a in the foot width direction rearward in the foot length direction, toward the outer side in a direction of width, and is curved convexly inward in the foot width direction. More specifically, the recessed edge portion 310b is in a shape intersecting with a heel center HC of the wearer and curved convexly inward in the foot width direction. The heel center HC means a straight line that connects the center of a heel bone of the standard wearer of the shoe 1 and a position between the third toe and the fourth toe to each other. The recessed edge portion 310b is larger in radius of curvature than the front edge portion 310a.

In this example as well, the entire plate 300 may be formed from the reinforcement portion 310.

[Example]

An Example of the embodiment together with a Comparative Example will now be described.

(1) Measurement of Weight Average Fiber Length

A solvent in which a synthetic resin contained in a test piece cut from a molded product was dissolvable was selected as appropriate. The test piece was placed in the selected solvent and subjected to heating treatment as appropriate to prepare the solvent in which fibers and the synthetic resin were separate from each other. Thereafter, the solvent was cast in filter paper. The fibers dispersed in the filter paper were obtained by drying the solvent, and the fibers were observed with an optical microscope (magnification from 50x to 200x) as described previously. A fiber length of randomly selected one thousand fibers was measured to calculate the weight average fiber length (Lw) in accordance with an expression below.

$$\text{Average fiber length} = \Sigma(\text{Mi}^2 \times \text{Ni})/\Sigma(\text{Mi} \times \text{Ni})$$

Mi: fiber length (mm)
Ni: the number of fibers having the fiber length Mi

(2) Measurement of Flexural Rigidity of Molded Product

From a square-plate test piece having a size of 80 mm × 80 mm × 2 mm thick obtained in each of Example and Comparative Example, a strip test piece having a size of 80 mm × 10 mm × 2 mm thick was cut along each of a direction of flow of a resin (an MD direction below) in injection molding and a direction at a right angle (a TD direction below) with respect to the direction of flow of the resin in injection molding. Flexural rigidity of the obtained strip test piece was measured with the use of a three-point bending test jig (a radius of an indenter being 5 mm) under such a test condition as a support span of 32 mm and a test speed of 2 mm/min. "Instron"® 5566 Universal Testing Machine (manufactured by Instron) was employed as a test machine.

(3) Measurement of Specific Gravity of Molded Product

From a square-plate test piece having a size of 80 mm × 80 mm × 2 mm thick obtained in each of Example and Comparative Example, a strip test piece having a size of 80 mm × 10 mm × 2 mm thick was cut. The specific gravity of the obtained test piece having the size of 80 mm × 10 mm × 2 mm thick was measured by an immersion method. Distilled water was employed as a solution and an average value of five test pieces was calculated.

(Example)

By injection molding Torayca™ long-fiber pellet "TLP9040" with the use of an injection molding machine

7

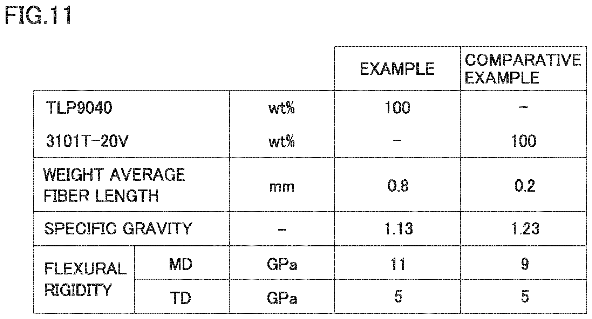

SE75DUZ-C250 manufactured by Sumitomo Heavy Industries, Ltd. under such conditions as a time period of injection of two seconds, a back pressure of 10 MPa, a pressure retention time of ten seconds, a cylinder temperature of 230°C, and a mold temperature of 60°C, a test piece having a size of 80 mm × 80 mm × 2 mm thick was made as a molded product. The cylinder temperature refers to a temperature of a portion of the injection molding machine for heating and melting a material for molding, and the mold temperature refers to a temperature of the mold in which a resin is injected for molding into a prescribed shape. The obtained test piece was rested in a constant temperature and humidity chamber adjusted to a temperature of 23°C and RH of 50% for twenty-four hours and thereafter subjected to characteristic evaluation. Table 1 shown in Fig. 11 summarizes results of evaluation with the method described previously.

(Comparative Example)

By injection molding Torayca™ short-fiber pellet "3101T-20V" with the use of the injection molding machine SE75DUZ-C250 manufactured by Sumitomo Heavy Industries, Ltd. under such conditions as a time period of injection of two seconds, a back pressure of 10 MPa, a pressure retention time of ten seconds, a cylinder temperature of 270°C, and a mold temperature of 60°C, a test piece having a size of 80 mm × 80 mm × 2 mm thick was made as a molded product. The cylinder temperature refers to a temperature of a portion of the injection molding machine for heating and melting a material for molding, and the mold temperature refers to a temperature of the mold in which a material for molding is injected for molding into a prescribed shape. The obtained test piece was rested in a constant temperature and humidity chamber adjusted to a temperature of 23°C and RH of 50% for twenty-four hours and thereafter evaluated with the method described previously. Table 1 shown in Fig. 11 shows results of evaluation.

It should be understood that the embodiment and the example disclosed herein are illustrative and non-restrictive in every respect. The scope of the present invention is defined by the terms of the claims rather than the description of the embodiment and the example above.

A plate according to the claimed invention is a plate used for a sole that forms a part of a shoe. The plate includes a reinforcement portion composed of a composite material containing a synthetic resin and a plurality of fibers. The plurality of fibers in the reinforcement portion each have a weight average fiber length not shorter than 0.4 mm and not longer than 7.0 mm and have such an orientation property that orientations are aligned in a foot length direction.

In this plate, the fibers in the reinforcement portion each have the weight average fiber length not shorter than 0.4 mm and not longer than 7.0 mm and have such an orientation property that orientations thereof are aligned in the foot length direction. Therefore, flexural rigidity of the reinforcement portion in the foot length direction is higher than flexural rigidity of the reinforcement portion in the foot width direction.

In other words, flexural rigidity of the reinforcement portion in the foot width direction is lower than flexural rigidity of the reinforcement portion in the foot length direction. Therefore, in natural running motions in which the foot contacts the ground from the outer side in the foot width direction, loads imposed on the foot portion at the time of contact with the ground are mitigated. Since flexural rigidity of the reinforcement portion in the foot length direction is high, excessive deformation of the sole in particular at the time of take-off is suppressed and hence stability in the foot length direction is improved. Flexural rigidity of the reinforcement portion in the foot length direction of the shoe may be at least two times as high as flexural rigidity of the reinforcement portion in the foot width direction of the shoe.

The plate according to the claimed invention includes a front reinforcement region that extends from a front end portion located at a front end in the foot length direction of the shoe to a part superimposed in a direction of thickness of the sole, on a line that connects central portions of metatarsal bones of a wearer of the shoe to each other, and the reinforcement portion is provided over the entirety of the front reinforcement region.

In this aspect, since the reinforcement portion is arranged in a range that extends across the MP joint of the foot of the wearer in the foot length direction, excessive deformation of the sole in particular at the time of take-off is suppressed.

The plate may include a rear reinforcement region that extends from a rear end portion located at a rear end in the foot length direction of the shoe to a part superimposed in a direction of thickness of the sole, on a line that connects central portions of metatarsal bones of a wearer of the shoe to each other, and the reinforcement portion may be provided over the entirety of the rear reinforcement region.

In this aspect, since the reinforcement portion is arranged in a range that extends across the Lisfranc joint of the foot of the wearer in the foot length direction, excessive deformation of the sole in particular at the time of take-off is suppressed.

The front reinforcement region may include an inner foot region formed on an inner side in the foot width direction of the shoe, an outer foot region formed on an outer side in the foot width direction, and a middle region formed between the inner foot region and the outer foot region.

In this case, the plate may further include an outer foot support portion provided in the outer foot region. The reinforcement portion may include a middle reinforcement portion provided in the middle region, and flexural rigidity of the outer foot support portion in the foot width direction may be lower than flexural rigidity of the middle reinforcement portion in the foot width direction.

The plate may further include an inner foot support portion provided in the inner foot region. In this case, flexural rigidity of the inner foot support portion in the foot width direction is preferably lower than flexural rigidity of the middle reinforcement portion in the foot width direction.

The plate may further include a middle support portion provided in the middle region. The reinforcement portion may include an outer foot reinforcement portion provided in the outer foot region, and flexural rigidity of the outer foot reinforcement portion in the foot width direction may be lower than flexural rigidity of the middle support portion in the foot width direction.

The reinforcement portion may further include an inner foot reinforcement portion provided in the inner foot region. In this case, flexural rigidity of the inner foot reinforcement portion in the foot width direction is preferably lower than flexural rigidity of the middle support portion in the foot width direction.

A sole according to the claimed invention includes the plate according to any one of claims 1 to 8 and a midsole that holds the plate.

A shoe according to one aspect of the embodiment includes the sole according to claim 9 and an upper connected to the sole and located above the sole.

A method of manufacturing the plate plate according to any one of claims 1 to 8 used for a sole that forms a part of a shoe according to the claimed invention includes a preparation step of preparing a mold provided with a space in a shape conforming to the plate and an injection step of forming, by injecting a composite material containing a synthetic resin and a plurality of fibers from a toe side toward a heel side in the mold or from the heel side toward the toe side in the mold, a reinforcement portion having such an orientation property that orientations of the plurality of fibers are aligned in a foot length direction.

With this method of manufacturing a plate, in the injection step, the reinforcement portion having such an orientation property that orientations of the plurality of fibers are aligned in the foot length direction is formed. In other words, a plate that can achieve both of mitigation of shock at the time of contact with the ground and improvement in stability in the foot length direction is manufactured.

Though an embodiment of the present invention has been described, it should be understood that the embodiment disclosed herein is illustrative and non-restrictive in every respect. The scope of the present invention is defined by the terms of the claims.

**Claims**

1. A plate (300) used for a sole (10) that forms a part of a shoe (1), the plate (300) comprising:

   a reinforcement portion (310) composed of a composite material containing a synthetic resin and a plurality of fibers, wherein
   the plurality of fibers in the reinforcement portion each have a weight average fiber length not shorter than 0.4 mm and not longer than 7.0 mm and have such an orientation property that orientations are aligned in a foot length direction, wherein
   the weight average fiber length is calculated in accordance with:

$$\text{average fiber length} = \Sigma(Mi^2 \times Ni)/\Sigma(Mi \times Ni)$$

   Mi: fiber length (mm)
   Ni: the number of fibers having the fiber length Mi; and

   **characterized in that** a front reinforcement region (R10) extends from a front end portion (300a) located at a front end in the foot length direction of the shoe (1) to a part superimposed in a direction of thickness of the sole (10), on a line that connects central portions of metatarsal bones (B10) of a wearer of the shoe (1) to each other, wherein
   the reinforcement portion (310) is provided over an entirety of the front reinforcement region (R10).

2. The plate (300) according to claim 1, wherein flexural rigidity of the reinforcement portion in a foot length direction of the shoe is at least two times as high as flexural rigidity of the reinforcement portion in a foot width direction of the shoe

3. The plate according to claim 1 or 2, comprising a rear reinforcement region (R20) that extends from a rear end portion (300b) located at a rear end in the foot length direction of the shoe to a part superimposed in a direction of thickness of the sole, on a line that connects central portions of metatarsal bones (B10) of a wearer of the shoe to each other, wherein
the reinforcement portion is provided over an entirety of the rear reinforcement region.

4. The plate according to claim 1, comprising a front reinforcement region (R10) that extends from a front end portion (300a) located at a front end in the foot length direction of the shoe to a part superimposed in a direction of thickness of the sole, on a line that connects central portions of metatarsal bones (B10) of a wearer of the shoe to each other, wherein

   the front reinforcement region (R10) includes

   an inner foot region (R11) formed on an inner side in a foot width direction of the shoe,
   an outer foot region (R12) formed on an outer side in the foot width direction, and
   a middle region (R13) formed between the inner foot region and the outer foot region.

5. The plate according to claim 4, further comprising an outer foot support portion (322) provided in the outer foot region, wherein

   the reinforcement portion includes a middle reinforcement portion (313) provided in the middle region, and
   flexural rigidity of the outer foot support portion in the foot width direction is lower than flexural rigidity of the middle reinforcement portion in the foot width direction.

6. The plate according to claim 5, further comprising an inner foot support portion (321) provided in the inner foot region, wherein
   flexural rigidity of the inner foot support portion in the foot width direction is lower than flexural rigidity of the middle reinforcement portion in the foot width direction.

7. The plate according to claim 4, further comprising a middle support portion (323) provided in the middle region, wherein

   the reinforcement portion includes an outer foot reinforcement portion (312) provided in the outer foot region, and
   flexural rigidity of the outer foot reinforcement portion in the foot width direction is lower than flexural rigidity of the middle support portion in the foot width direction.

8. The plate according to claim 7, wherein

   the reinforcement portion further includes an inner foot reinforcement portion (311) provided in the inner foot region, and
   flexural rigidity of the inner foot reinforcement portion in the foot width direction is lower than flexural rigidity of the middle support portion in the foot width direction.

9. A sole (10) comprising:

   the plate (300) according to any one of claims 1 to 8; and
   a midsole (200) that holds the plate.

10. A shoe (1) comprising:

    the sole (10) according to claim 9; and
    an upper (20) connected to the sole and located above the sole.

11. A method of manufacturing the plate (300) according to any one of claims 1 to 8, the plate (300) used for a sole that forms a part of a shoe, the method comprising:

    a preparation step of preparing a mold (30) provided with a space in a shape conforming to the plate (300); and
    an injection step of forming, by injecting a composite material containing a synthetic resin and a plurality of fibers from a toe side toward a heel side in the mold or from the heel side toward the toe side in the mold, the reinforcement portion (310).

**Patentansprüche**

1. Platte (300), die für eine Sohle (10) verwendet wird, die einen Teil eines Schuhs (1) bildet, wobei die Platte (300) Folgendes umfasst:

   einen Verstärkungsabschnitt (310), der aus einem Verbundwerkstoff zusammengesetzt ist, der ein Kunstharz und eine Vielzahl von Fasern enthält, wobei
   die Vielzahl von Fasern in dem Verstärkungsabschnitt jeweils eine gewichtsmittlere Faserlänge von nicht kürzer als 0,4 mm und nicht länger als 7,0 mm aufweisen und eine solche Orientierungseigenschaft aufweisen, dass die Orientierungen in einer Fußlängenrichtung ausgerichtet sind, wobei
   die gewichtsmittlere Faserlänge wie folgt berechnet wird:

$$\text{durchschnittliche Faserlänge} = \Sigma(M_i^2 \times N_i)/\Sigma(M_i \times N_i)$$

   Mi: Faserlänge (mm)
   Ni: die Anzahl von Fasern mit der Faserlänge Mi; und
   **dadurch gekennzeichnet, dass** sich ein vorderer Verstärkungsbereich (R10) von einem vorderen Endabschnitt (300a), der sich an einem Vorderende in der Fußlängenrichtung des Schuhs (1) befindet, zu einem Teil, der in einer Dickenrichtung der Sohle (10) überlagert ist, auf einer Linie erstreckt, die zentrale Abschnitte von Mittelfußknochen (B10) eines Trägers des Schuhs (1) miteinander verbindet, wobei
   der Verstärkungsabschnitt (310) über einer Gesamtheit des vorderen Verstärkungsbereichs (R10) bereitgestellt ist.

2. Platte (300) nach Anspruch 1, wobei eine Biegestarrheit des Verstärkungsabschnitts in einer Fußlängenrichtung des Schuhs mindestens das Doppelte einer Biegestarrheit des Verstärkungsabschnitts in einer Fußbreitenrichtung des Schuhs beträgt.

3. Platte nach Anspruch 1 oder 2, umfassend einen hinteren Verstärkungsbereich (R20), der sich von einem hinteren Endabschnitt (300b), der sich an einem Hinterende in der Fußlängenrichtung des Schuhs befindet, zu einem Teil, der in einer Dickenrichtung der Sohle überlagert ist, auf einer Linie erstreckt, die zentrale Abschnitte von Mittelfußknochen (B10) eines Trägers des Schuhs miteinander verbindet, wobei
   der Verstärkungsabschnitt über eine Gesamtheit des hinteren Verstärkungsbereichs bereitgestellt ist.

4. Platte nach Anspruch 1, umfassend einen vorderen Verstärkungsbereich (R10), der sich von einem vorderen Endabschnitt (300a), der sich an einem Vorderende in der Fußlängenrichtung des Schuhs befindet, zu einem Teil, der in einer Dickenrichtung der Sohle überlagert ist, auf einer Linie erstreckt, die zentrale Abschnitte von Mittelfußknochen (B10) eines Trägers des Schuhs miteinander verbindet, wobei
   der vordere Verstärkungsbereich (R10) Folgendes einschließt:

   einen inneren Fußbereich (R11), der auf einer Innenseite in einer Fußbreitenrichtung des Schuhs ausgebildet ist, einen äußeren Fußbereich (R12), der auf einer Außenseite in der Fußbreitenrichtung ausgebildet ist, und einen mittleren Bereich (R13), der zwischen dem inneren Fußbereich und dem äußeren Fußbereich ausgebildet ist.

5. Platte nach Anspruch 4, ferner umfassend einen äußeren Fußstützabschnitt (322), der in dem äußeren Fußbereich bereitgestellt ist, wobei

   der Verstärkungsabschnitt einen mittleren Verstärkungsabschnitt (313) einschließt, der in dem mittleren Bereich bereitgestellt ist, und
   eine Biegestarrheit des äußeren Fußstützabschnitts in der Fußbreitenrichtung geringer ist als eine Biegestarrheit des mittleren Verstärkungsabschnitts in der Fußbreitenrichtung.

6. Platte nach Anspruch 5, ferner umfassend einen inneren Fußstützabschnitt (321), der in dem inneren Fußbereich bereitgestellt ist, wobei
   eine Biegestarrheit des inneren Fußstützabschnitts in der Fußbreitenrichtung geringer ist als eine Biegestarrheit des mittleren Verstärkungsabschnitts in der Fußbreitenrichtung.

**7.** Platte nach Anspruch 4, ferner umfassend einen mittleren Stützabschnitt (323), der in dem mittleren Bereich bereitgestellt ist, wobei

der Verstärkungsabschnitt einen äußeren Fußverstärkungsabschnitt (312) einschließt, der in dem äußeren Fußbereich bereitgestellt ist, und
eine Biegestarrheit des äußeren Fußverstärkungsabschnitts in der Fußbreitenrichtung geringer als eine Biegestarrheit des mittleren Stützabschnitts in der Fußbreitenrichtung ist.

**8.** Platte nach Anspruch 7, wobei

der Verstärkungsabschnitt ferner einen inneren Fußverstärkungsabschnitt (311) einschließt, der in dem inneren Fußbereich bereitgestellt ist, und
eine Biegestarrheit des inneren Fußverstärkungsabschnitts in der Fußbreitenrichtung geringer als eine Biegestarrheit des mittleren Stützabschnitts in der Fußbreitenrichtung ist.

**9.** Sohle (10), Folgendes umfassend:

die Platte (300) nach einem der Ansprüche 1 bis 8; und
eine Zwischensohle (200), die die Platte hält.

**10.** Schuh (1), Folgendes umfassend:

die Sohle (10) nach Anspruch 9; und
einen Schaft (20), der mit der Sohle verbunden ist und sich über der Sohle befindet.

**11.** Verfahren zum Herstellen der Platte (300) nach einem der Ansprüche 1 bis 8, wobei die Platte (300) für eine Sohle verwendet wird, die einen Teil eines Schuhs bildet, wobei das Verfahren Folgendes umfasst:

einen Vorbereitungsschritt zum Vorbereiten eines Formwerkzeugs (30), das mit einem Raum in einer Form versehen ist, die zu der Platte (300) passt; und
einen Spritzschritt zum Bilden des Verstärkungsabschnitts (310) durch Einspritzen eines Verbundwerkstoffs, der ein Kunstharz und eine Vielzahl von Fasern enthält, von einer Zehenseite zu einer Fersenseite hin in dem Formwerkzeug oder von der Fersenseite zu der Zehenseite hin in dem Formwerkzeug.

**Revendications**

**1.** Plaque (300) utilisée pour une semelle (10) qui forme une partie d'une chaussure (1), la plaque (300) comprenant :

une partie de renfort (310) composée d'un matériau composite contenant une résine synthétique et une pluralité de fibres, dans laquelle
la pluralité de fibres dans la partie de renfort ont chacune une longueur de fibre moyenne en poids pas plus courte que 0,4 mm et pas plus longue que 7,0 mm et présentent une propriété d'orientation telle que des orientations sont alignées dans une direction de la longueur du pied, dans laquelle
la longueur de fibre moyenne en poids est calculée selon la formule suivante :

$$\text{longueur de fibre moyenne} = \Sigma(\text{Mi}^2 \times \text{Ni})/\Sigma(\text{Mi} \times \text{Ni})$$

Mi : longueur de fibre (mm)
Ni : le nombre de fibres ayant la longueur de fibre Mi ; et
**caractérisée en ce qu'**une région de renfort avant (R10) s'étend depuis une partie d'extrémité avant (300a) située à une extrémité avant dans la direction de la longueur du pied de la chaussure (1) jusqu'à une partie superposée dans une direction d'épaisseur de la semelle (10), sur une ligne qui relie des parties centrales d'os métatarsiens (B10) d'un porteur de la chaussure (1) l'une à l'autre, dans laquelle
la partie de renfort (310) est fournie sur une totalité de la région de renfort avant (R10).

**2.** Plaque (300) selon la revendication 1, dans laquelle une rigidité en flexion de la partie de renfort dans une direction de la longueur du pied de la chaussure est au moins deux fois plus élevée qu'une rigidité en flexion de la partie de renfort dans une direction de la largeur du pied de la chaussure.

3. Plaque selon la revendication 1 ou 2, comprenant une région de renfort arrière (R20) qui s'étend d'une partie d'extrémité arrière (300b) située à une extrémité arrière dans la direction de la longueur du pied de la chaussure jusqu'à une partie superposée dans une direction d'épaisseur de la semelle, sur une ligne qui relie des parties centrales d'os métatarsiens (B10) d'un porteur de la chaussure l'une à l'autre, dans laquelle
la partie de renfort est fournie sur une totalité de la région de renfort arrière.

4. Plaque selon la revendication 1, comprenant une région de renfort avant (R10) qui s'étend d'une partie d'extrémité avant (300a) située à une extrémité avant dans la direction de la longueur du pied de la chaussure jusqu'à une partie superposée dans une direction d'épaisseur de la semelle, sur une ligne qui relie des parties centrales d'os métatarsiens (B10) d'un porteur de la chaussure l'une à l'autre, dans laquelle

   la région de renfort avant (R10) inclut
   une région de pied intérieure (R11) formée sur un côté intérieur dans une direction de largeur de pied de la chaussure,
   une région de pied extérieure (R12) formée sur un côté extérieur dans la direction de largeur de pied, et
   une région de milieu (R13) formée entre la région de pied intérieure et la région de pied extérieure.

5. Plaque selon la revendication 4, comprenant en outre une partie de support de pied extérieure (322) fournie dans la région de pied extérieure, dans laquelle

   la partie de renfort inclut une partie de renfort de milieu (313) fournie dans la région de milieu, et
   une rigidité en flexion de la partie de support de pied extérieure dans la direction de la largeur du pied est inférieure à une rigidité en flexion de la partie de renfort de milieu dans la direction de la largeur du pied.

6. Plaque selon la revendication 5, comprenant en outre une partie de support de pied intérieure (321) fournie dans la région de pied intérieure, dans laquelle
   une rigidité en flexion de la partie de support de pied intérieure dans la direction de la largeur du pied est inférieure à une rigidité en flexion de la partie de renfort de milieu dans la direction de la largeur du pied.

7. Plaque selon la revendication 4, comprenant en outre une partie de support de milieu (323) fournie dans la région de milieu, dans laquelle

   la partie de renfort inclut une partie de renfort de pied extérieure (312) fournie dans la région de pied extérieure, et
   une rigidité en flexion de la partie de renfort de pied extérieure dans la direction de la largeur du pied est inférieure à une rigidité en flexion de la partie de support de milieu dans la direction de largeur de pied.

8. Plaque selon la revendication 7, dans laquelle

   la partie de renfort inclut en outre une partie de renfort de pied intérieure (311) fournie dans la région de pied intérieure, et
   une rigidité en flexion de la partie de renfort de pied intérieure dans la direction de la largeur du pied est inférieure à une rigidité en flexion de la partie de support de milieu dans la direction de la largeur du pied.

9. Semelle (10) comprenant :

   la plaque (300) selon l'une quelconque des revendications 1 à 8 ; et
   une semelle intercalaire (200) qui maintient la plaque.

10. Chaussure (1) comprenant :

    la semelle (10) selon la revendication 9 ; et
    une tige (20) reliée à la semelle et située au-dessus de la semelle.

11. Procédé de fabrication de la plaque (300) selon l'une quelconque des revendications 1 à 8, la plaque (300) étant utilisée pour une semelle qui forme une partie d'une chaussure, le procédé comprenant :

une étape d'élaboration pour élaborer un moule (30) pourvu d'un espace dans une forme correspondant à la plaque (300) ; et

une étape d'injection pour former la partie de renfort (310) par l'injection d'un matériau composite contenant une résine synthétique et une pluralité de fibres à partir d'un côté orteil vers un côté talon dans le moule ou à partir du côté talon vers le côté orteil dans le moule.

FIG.1

**FIG.2**

FIG.3

310R

310

300

FIG.4

FIG.5

FIG.6

FIG.7

FIG.8

300a

300

330

MP JOINT

R10

L10

B10

B10

LISFRANC JOINT

310

R20

300b

## FIG.9

**FIG.10**

FIG.11

|  |  |  | EXAMPLE | COMPARATIVE EXAMPLE |
|---|---|---|---|---|
| TLP9040 |  | wt% | 100 | − |
| 3101T−20V |  | wt% | − | 100 |
| WEIGHT AVERAGE FIBER LENGTH |  | mm | 0.8 | 0.2 |
| SPECIFIC GRAVITY |  | − | 1.13 | 1.23 |
| FLEXURAL RIGIDITY | MD | GPa | 11 | 9 |
|  | TD | GPa | 5 | 5 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018534028 A

- WO 9109547 A1